(19) Europäisches Patentamt
European Patent Office
Office européen des brevets

(11) **EP 3 284 168 B1**

(12) **FASCICULE DE BREVET EUROPEEN**

(45) Date de publication et mention
de la délivrance du brevet:
**03.06.2020   Bulletin 2020/23**

(21) Numéro de dépôt: **16731192.7**

(22) Date de dépôt: **06.04.2016**

(51) Int Cl.:
***H02P 21/14*** *(2016.01)*

(86) Numéro de dépôt international:
**PCT/FR2016/050780**

(87) Numéro de publication internationale:
**WO 2016/166443 (20.10.2016 Gazette 2016/42)**

(54) **PROCÉDÉ DE CONTRÔLE DU COUPLE D'UNE MACHINE ÉLECTRIQUE SYNCHRONE**

VERFAHREN ZUR STEUERUNG DES DREHMOMENTS EINER ELEKTRISCHEN SYNCHRONMASCHINE

METHOD FOR CONTROLLING THE TORQUE OF AN ELECTRICAL SYNCHRONOUS MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.04.2015   FR 1553440**

(43) Date de publication de la demande:
**21.02.2018   Bulletin 2018/08**

(73) Titulaire: **Renault S.A.S.**
**92100 Boulogne-Billancourt (FR)**

(72) Inventeurs:
• **MERIENNE, Ludovic**
  **91190 Gif Sur Yvette (FR)**
• **NEGRE, Edouard**
  **78180 Montigny-Le-Bretonneux (FR)**

(56) Documents cités:
**EP-A1- 2 464 002        US-A1- 2011 144 843**
**US-A1- 2012 212 169      US-A1- 2013 193 886**
**US-A1- 2014 333 240**

**Description**

L'invention a pour domaine technique les machines électriques, et plus particulièrement la commande de telles machines.

Elle se rapporte plus particulièrement à un moteur électrique synchrone à aimants permanents, notamment pour véhicule automobile à traction électrique.

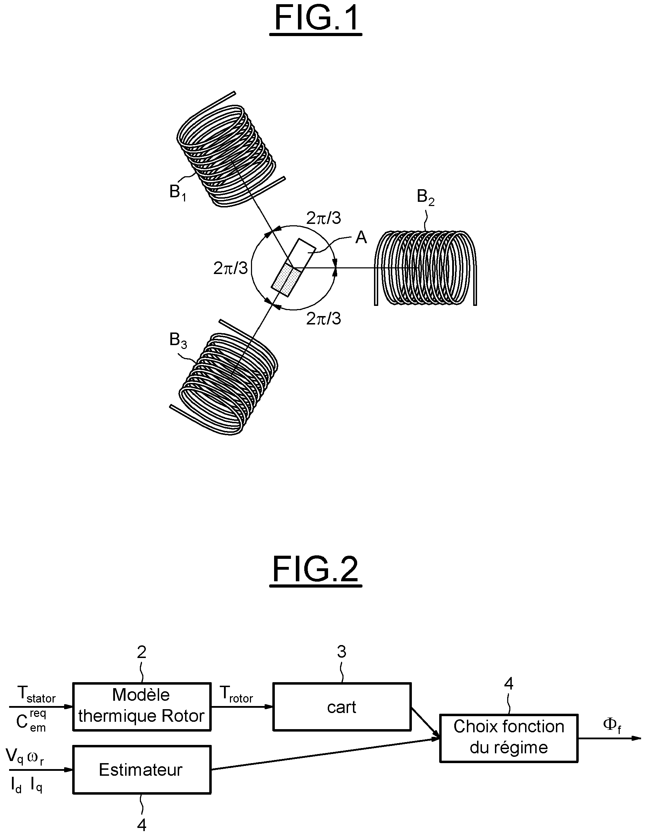

On a représenté sur la figure 1 le principe général de réalisation d'une machine électrique synchrone.

Une telle machine comprend une partie fixe appelée stator et une partie mobile appelée rotor. Le stator comprend ici trois bobines B1, B2, B3 décalées de 120° et alimentées en courant alternatif. Le rotor comprend une bobine alimentée en courant continu ou, comme représenté, un aimant permanent A, selon le type de rotor.

Dans un véhicule automobile à traction électrique, le couple fourni par un moteur électrique doit être précisément contrôlé. Le couple délivré par une machine électrique étant directement lié aux courants circulant dans celle-ci, ces courants doivent également être commandés de façon précise.

Dans une machine synchrone, notamment dans une machine telle qu'illustrée à la figure 1, les courants dans les trois phases du stator sont sinusoïdaux et déphasés chacun de $2\pi/3$ rad. Ces courants créent un champ magnétique tournant dans la machine électrique. Comme une boussole, le rotor s'aligne naturellement sur le champ magnétique tournant créé par le stator. Ainsi, la fréquence de rotation du rotor est égale à la fréquence des courants du stator, d'où le nom de « synchrone », au nombre de paires de pôles près.

Ce sont les amplitudes des courants du stator et la puissance des aimants du rotor qui créent le couple nécessaire à la rotation de la machine. Pour commander ces courants, il faut donc appliquer aux phases du stator des tensions sinusoïdales déphasées de $2\pi/3$ rad.

Généralement, il est plus simple d'appliquer une régulation sur des valeurs presque constantes que sur des signaux sinusoïdaux. La transformée de Park est généralement utilisée pour projeter un système triphasé sur un espace bidimensionnel pour se retrouver dans un repère tournant équivalent dans lequel les signaux sinusoïdaux deviennent sensiblement constants.

Le repère de Park correspond ainsi à un repère lié au champ tournant, et donc lié au rotor dans le cas de la machine synchrone.

L'axe du bobinage du rotor est nommé axe direct, noté d. L'axe en quadrature est noté q.

En travaillant avec des courants et des tensions exprimés dans l'espace de Park, il est ainsi possible d'agir sur ces courants ou sur des tensions variant lentement plutôt que sur des signaux sinusoïdaux pour réguler la machine triphasée à commander.

En faisant la transformée inverse, il est possible de se ramener au repère normal de la machine et donc de connaître exactement quels sont les tensions ou les courants à appliquer sur chaque phase de la machine.

Dans l'espace de Park, le système à commander est le suivant :

$$V_d = R_s I_d + L_d \dot{I}_d - \omega_r L_q I_q$$
$$V_q = R_s I_q + L_q \dot{I}_q + \omega_r (L_d I_d + \Phi_f) \qquad (1)$$

Où :

- $V_d$ et $V_q$ sont les tensions appliquées sur les deux axes du plan de Park de la machine (en Volt),
- $I_d$, $I_q$ sont les courants statoriques circulant dans la machine sur les axes respectivement direct et en quadrature du plan de Park (en Ampère),
- $R_s$ représente la résistance équivalente du stator de la machine (en Ohm),
- $L_d$ et $L_q$ sont les inductances sur chaque axe de la machine (en Henry),
- $\omega_r$ est la vitesse de rotation du champ magnétique de la machine en rad/s ; comme il s'agit d'une machine synchrone, elle est égale à la vitesse de rotation du rotor multipliée par le nombre de paires de pôles de la machine,
- $\Phi_f$ représente le flux généré par les aimants du rotor (en Weber Wb°) ;

On cherche à générer du couple avec le meilleur rendement possible pour la machine, sur une plage de vitesses connue. Le couple peut se calculer de la manière suivante :

$$C_{em} = p(\Phi_d I_q - \Phi_q I_d) \qquad (3)$$

Où :

- $C_{em}$ est le couple électromagnétique généré par la machine,
- p est le nombre de paires de pôles du rotor de la machine,
- $\Phi_d$ et $\Phi_q$ représentent les flux générés sur les axes d et q de la machine.

Les flux $\Phi_d$ et $\Phi_q$ sont donnés par les relations:

$$\Phi_d = L_d I_d + \Phi_f \quad et \quad \Phi_q = L_q I_q \qquad (4)$$

En combinant les équations (3) et (4), on peut écrire la relation entre le couple et les courants statoriques:

$$C_{em} = p\lfloor \Phi_f I_q + I_d I_q \left( L_d - L_q \right) \rfloor \qquad (5)$$

Le terme ($L_d$ - $L_q$) représente la saillance de la machine. Il représente la capacité de la partie métallique du rotor à s'aligner avec le champ magnétique créé par le stator.

Ainsi, dans cette machine, il existe pour chaque valeur de couple une répartition optimale des courants statoriques $I_d$ et $I_q$ qui offre le meilleur rendement.

Il est ainsi possible de déterminer le point de fonctionnement de la machine pour obtenir une valeur de couple désirée à partir du flux magnétique $\Phi_f$.

Toutefois, ce terme $\Phi_f$ n'est pas constant dans la vie de la machine électrique. Ce terme est même particulièrement lié à la température des aimants situés dans le rotor. Une variation du flux magnétique pose en premier lieu des problèmes de précision du couple. En effet, une erreur sur le terme $\Phi_f$ introduit immédiatement une erreur sur le couple calculé d'après la relation (5).

De plus, l'optimisation du point de fonctionnement étant réalisée en considérant une valeur pour ce terme $\Phi_f$, si sa valeur change, on n'obtient plus le point de fonctionnement optimum. Ainsi, le couple réalisé n'est potentiellement plus le bon et, de plus, ce nouveau couple n'est pas réalisé avec le meilleur rendement possible.

Il existe dans l'état de la technique des solutions destinées à améliorer le point de fonctionnement d'une machine électrique en fonction de ses conditions de fonctionnement.

On pourra à cet égard se référer au document CN 1 025 22930 qui concerne l'élaboration du point de fonctionnement d'une machine électrique à partir d'un modèle thermique utilisé pour évaluer la température des aimants en fonction de la température du stator pour adapter le point de fonctionnement.

On pourra également se référer au document CN 1 038 88 041 qui concerne l'estimation du flux $\Phi_f$ à vitesse non nulle et à courant nul.

Par ailleurs, le document US 2009/0153087 concerne l'amélioration de la précision du couple d'une machine électrique en fonction de la température, en amplifiant une consigne de couple fourni à la machine lorsque la température augmente.

Le document EP2464002 décrit un procédé de contrôle d'un moteur électrique de traction, dans lequel on estime le flux du rotor de la machine en fonction de valeurs mesurées des courants statoriques, de la tension statorique quadratique et de la vitesse de rotation de la machine.

Le document US2013193886 décrit un procédé de commande d'un moteur électrique pour appareils électroménagers, sans capteur de position ni de vitesse de rotation du rotor. La position et la vitesse du rotor sont estimées dans ce document en utilisant un modèle, sur lequel on réalise une compensation des variations de résistance du moteur et du flux magnétique du rotor en fonction de la température du moteur électrique.

Au vu de ce qui précède, l'invention se propose de contrôler le couple d'une machine électrique synchrone à partir d'une estimation du flux magnétique généré par les aimants du rotor de la machine capable de délivrer, en permanence, un couple précis et ce, avec un rendement amélioré.

L'invention a donc pour objet un procédé de contrôle du couple d'une machine électrique synchrone dans lequel on génère des consignes de courant statorique aptes à imposer une valeur de couple désirée.

Selon une caractéristique générale de ce procédé, les consignes de courant statorique sont générées à partir d'une estimation du flux magnétique statorique sélectivement déterminée, selon les conditions de fonctionnement de la machine, soit en fonction de la température de fonctionnement du rotor de la machine, soit en fonction de valeurs mesurées de courant statorique, de la tension statorique en quadrature dans un repère tournant lié au rotor et de la vitesse de rotation du champ magnétique tournant de la machine, les consignes de courant statorique étant générées à partir du flux magnétique estimé.

Selon une autre caractéristique, le flux magnétique est sélectivement estimé selon la température du rotor à bas régime de la machine.

Dans un mode de mise en œuvre, lors de l'estimation du flux magnétique en fonction de la température du rotor, on utilise un modèle thermique du rotor pour délivrer une valeur de température du rotor, le flux magnétique étant extrait d'une cartographie à partir de ladite valeur de température.

Selon encore une autre caractéristique, on détermine la température du rotor à partir du modèle thermique et on limite la puissance de la machine si la température dépasse une valeur de seuil.

En ce qui concerne les consignes de courant, celles-ci peuvent être extraites d'une cartographie en fonction du couple désiré et du flux estimé.

Le flux magnétique peut être estimé d'une part en fonction de la température de fonctionnement du rotor ou d'autre part en fonction des valeurs mesurées de courant et de tension et de la vitesse de rotation du champ magnétique, respectivement pour des valeurs de régime de la machine relativement basses et relativement hautes.

On peut encore générer une valeur de tension d'excitation du statorau moyen d'un régulateur à partir des valeurs générées de consignes de courant statorique.

Avantageusement, les étapes de génération des consignes de courant sont mises en œuvre de manière itérative à une fréquence identique à une fréquence de mise à jour de l'estimation du flux magnétique rotorique, et inférieure à une fréquence de calcul des tensions statoriques nécessaire à la régulation des courants à leurs consignes.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1, dont il a déjà été fait mention, illustre la structure générale d'une machine électrique synchrone ;
- la figure 2 est un schéma synoptique illustrant l'estimation du flux magnétique $\Phi_f$ ;
- la figure 3 illustre schématiquement le modèle thermique servant à déterminer la température du rotor ;
- la figure 4 est un schéma synoptique illustrant le principe de l'élaboration d'une tension d'excitation des bobines statoriques ; et
- les figures 5 et 6 sont des courbes illustrant l'impact d'une modification du flux du rotor sur le point de fonctionnement de la machine électrique ;
- les figures 7a et 7b sont des courbes illustrant l'amélioration de la précision du couple fourni par une machine électrique asynchrone.

Comme cela a été exposé précédemment, le couple généré par une machine électrique dépend de la saillance de la machine, des courants statoriques circulant dans la machine sur les axes du plan de Park, du nombre de paires de pôles du rotor et du flux généré par les aimants du rotor.

L'invention se propose de déterminer le point de fonctionnement de la machine, c'est-à-dire de générer des consignes de courants statorique $I_d$ et $I_q$ à partir d'une estimation du flux magnétique $\Phi_f$ de la machine.

Cette estimation est effectuée pour toute la plage d'utilisation possible de la machine de manière à générer les courants $I_d$ et $I_q$ pour obtenir une valeur de couple désirée.

On notera que cette estimation est effectuée de manière itérative, c'est-à-dire à une fréquence prédéterminée, par exemple de 100 Hz, le flux estimé à une itération précédente étant modifié lors d'une itération suivante de manière à obtenir une valeur de flux correspondant au couple désiré.

Selon une première approche, le flux $\Phi_f$ est estimé à partir de la relation suivante :

$$\Phi_f = \frac{V_q - R_s I_q - L_q \dot{I}_q}{\omega_r} - L_d I_d \qquad (6)$$

On notera toutefois que, de préférence, les valeurs de tension d'excitation des bobinages statoriques sont mises à jour relativement rapidement, par exemple à une fréquence de l'ordre de 10 kHz. En revanche, les points de fonctionnement sont mis à jour plus lentement, par exemple, comme indiqué précédemment, à une fréquence de l'ordre de 100 Hz.

Ainsi, la régulation des courants est relativement rapide et assure une convergence vers les valeurs de consigne en moins de 10 ms, ce qui signifie qu'avant la prochaine modification du point de fonctionnement $I_d$, $I_q$, on atteint la phase de convergence de la régulation de courant.

L'estimation du flux, qui est destinée à corriger le point de fonctionnement du moteur, peut être réalisée à la fréquence de mise à jour des points de fonctionnement, c'est-à-dire à une fréquence inférieure à celle de la fréquence de mise à jour des tensions. Par conséquent, en utilisant les valeurs de courant juste avant la modification du point de fonctionnement, les termes dérivés dans l'équation (6) sont nuls puisque la convergence est atteinte. Par conséquent, l'équation (6) devient :

$$\Phi_f = \frac{V_q - R_s I_q - \omega_r L_d I_d}{\omega_r} = \frac{V_q - f\left(I_d, I_q, \omega_r\right)}{\omega_r} \qquad (7)$$

dans laquelle :

- $V_q$ est un terme issu de la régulation des courants et représente la tension voulue sur l'axe en quadrature de l'espace de Park.
- $\omega_r$ est la vitesse électrique mesurée via le capteur de position du rotor,
- $f(I_d, I_q, \omega_r)$ est cartographié sur banc moteur car ces termes $I_d, I_q, \omega_r$ dépendent de l'ensemble moteur et onduleur.

Cette équation permet ainsi d'obtenir une estimation du flux généré par les bobines du rotor.

On remarque que la présence de la vitesse de rotation du champ magnétique au dénominateur implique que cette relation permet d'offrir de bons résultats à haut régime lorsque les termes du dénominateur ne sont pas trop faibles. Par contre, à vitesse nulle ou, par continuité, à très bas régimes, l'équation (7) ci-dessus ne permet pas d'obtenir une estimation performante du flux.

Ainsi, à bas régime, l'estimation du flux est réalisée en fonction de la température de fonctionnement du rotor ou, plus précisément, en utilisant un modèle thermique du rotor.

On a ainsi représenté sur la figure 2 le mode de calcul de l'estimation du flux $\Phi_f$.

A haut régime, le flux magnétique $\Phi_f$ est calculé par un estimateur 1 selon l'équation (7) décrite précédemment à partir des courants statoriques $I_d$ et $I_q$, de la tension statorique en quadrature $V_q$ et de la vitesse $\omega_r$ de rotation du champ magnétique.

Pour les bas régime, un modèle thermique du rotor 2 est utilisé pour déterminer la température $T_{rotor}$ du rotor à partir de la température du stator $T_{stator}$ et du couple requis $C_{em}^{req}$. Ce modèle thermique est par exemple celui du document CN102522930. Une cartographie 3 dans laquelle sont stockées des valeurs de flux magnétique $\Phi_f$ en fonction de la température du rotor permet de délivrer une valeur de flux pour la valeur de température $T_{rotor}$ extraite du modèle thermique 2.

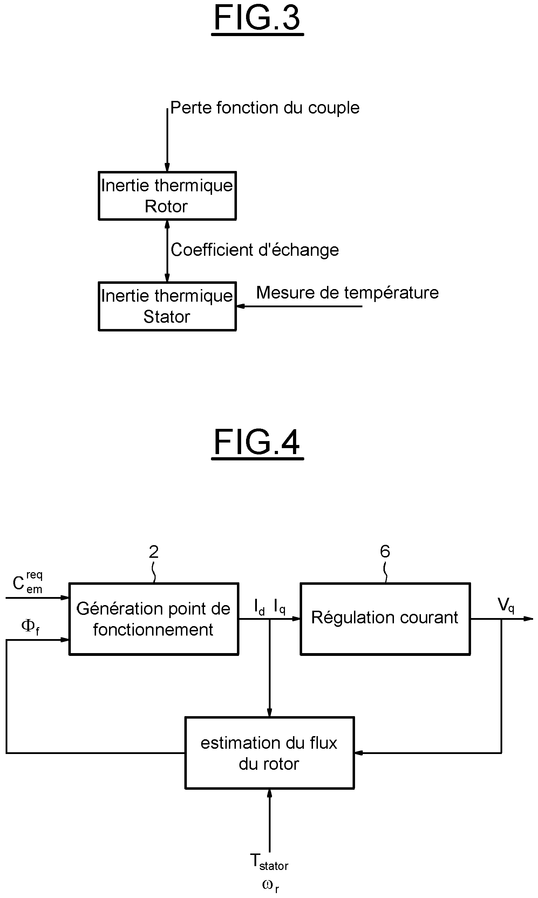

Comme le montre la figure 3, le modèle thermique est fondé sur une mesure de la température du stator et considère l'inertie thermique du stator, l'inertie thermique du rotor et les coefficients d'échange thermique entre le rotor et le stator.

Il est sollicité en cas de perte de la fonction de calcul du couple à partir de l'estimateur 1, c'est-à-dire à bas régime, typiquement en dessous de 500 tour/minute.

Ainsi, le flux magnétique est sélectivement estimé soit à partir du modèle thermique et de la cartographie, soit à partir de l'estimateur 1 et de la relation (7). Le choix entre les modes d'estimation est fait selon les conditions de fonctionnement, et plus particulièrement selon le régime de fonctionnement de la machine au moyen d'un étage de calcul 4.

En se référant maintenant à la figure 4, qui illustre un schéma synoptique de génération des tensions d'excitation des bobinages statoriques d'une machine électrique, après estimation du flux rotorique, la valeur de flux estimée est utilisée pour générer le point de fonctionnement de la machine, c'est-à-dire les valeurs des courants $I_d$ et $I_q$ pour un couple désiré $C_{em}^{req}$.

Ces valeurs de consignes de courant $I_d$ et $I_q$ sont extraites d'une cartographie 5 dans laquelle sont stockées des valeurs de courant statorique de consigne pour différentes valeurs de consigne de couple et de flux magnétique.

Un régulateur de courant 6 permet de délivrer des valeurs de tension d'excitation Vd et $V_q$ pour les bobines du stator de la machine.

On notera que la cartographie 5 est élaborée de manière à minimiser les pertes par effet Joule tout en permettant d'obtenir la consigne de couple souhaitée.

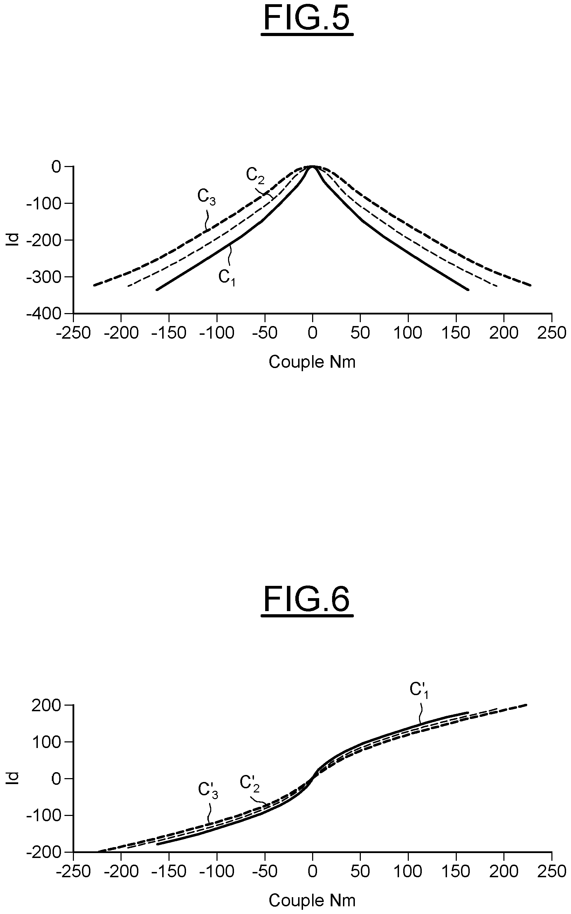

On se référera maintenant aux figures 5 et 6 qui illustrent l'impact de la modification du flux magnétique généré par le rotor pour l'optimisation du point de fonctionnement d'une machine électrique, dans les axes d et q du repère de Park, respectivement.

Sur ces figures, les courbes C1, C2 et C3 et C'1, C'2 et C'3 représentent la répartition optimale des courants statoriques pour des valeurs croissantes de flux.

On constate que l'impact positif de la modification du flux selon l'invention est particulièrement important sur l'utilisation de la saillance de la machine.

A faible flux, on demande très rapidement des courants $I_d$ importants pour utiliser la saillance, même pour les faibles couples. Pour des valeurs de flux élevées (courbe C3 et C'3), comme le flux des aimants est plus important, on utilise davantage le couple généré par les aimants que le couple de saillance.

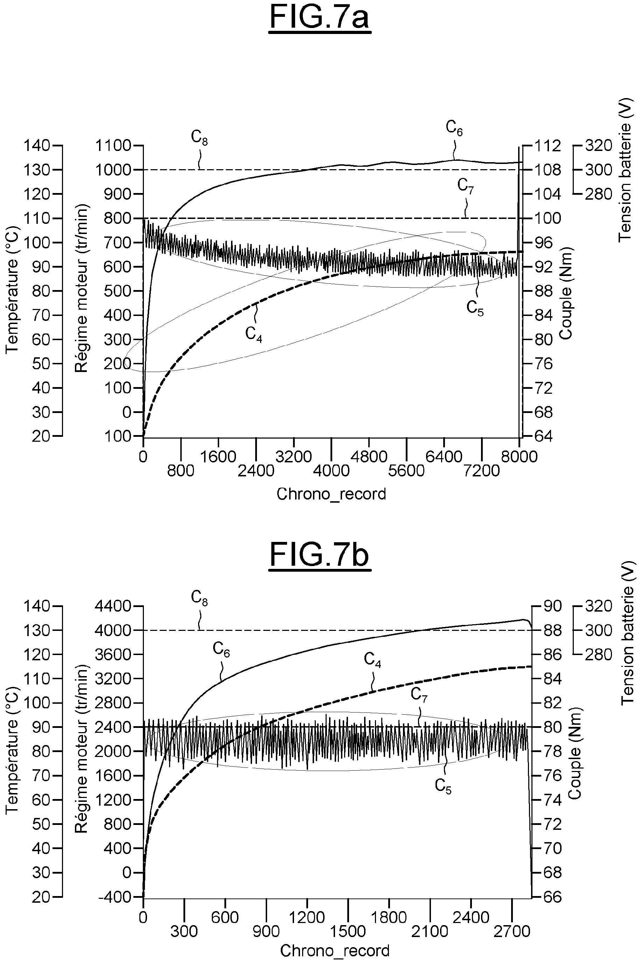

Les figures 7a et 7b illustrent enfin l'amélioration de la précision du contrôle du couple d'une machine électrique.

Sur ces figures, les courbes C4 correspondent à l'évolution de la température du rotor en fonction du temps, les courbes C5 illustrent l'évolution du couple fourni par la machine, les courbes C6 illustrent l'évolution de la température dustator, les courbes C7 correspondent à la consigne couple demandée à la machine et les courbes C8 correspondent au régime du moteur.

Les courbes de la figure 7a correspondent à un procédé de contrôle de couple sans estimation de flux alors que les courbes de la figure 7b correspondent à un procédé de contrôle de couple avec une estimation de flux capable de compenser les effets de la température des aimants et les écarts dus à la dispersion dans la fabrication du moteur.

Comme le montre la figure 7a, la température du rotor augmente en raison des différentes pertes à l'intérieur de ce dernier.

Par ailleurs, le flux magnétique du rotor diminue lorsque la température augmente, ce qui s'accompagne d'une diminution du couple puisque les consignes de courant au stator restent inchangées.

Au contraire, grâce à l'invention (figure 7b), lorsque le flux diminue, on ajuste les courants de manière à conserver un couple constant.

Ainsi, l'invention qui vient d'être décrite permet d'obtenir un couple précis avec le meilleur rendement possible. Elle permet de compenser la température des aimants, qui a sinon un impact important sur la précision, et d'absorber les écarts dus à la dispersion dans la fabrication du moteur. La régulation du couple permet dès lors de s'affranchir des dispersions de fabrication des aimants et permet ainsi d'utiliser des aimants de qualité moindre sans impact sur la précision du couple.

Par ailleurs, à haut régime, l'estimation du flux permet d'obtenir une estimation de la température moyenne des aimants grâce à la cartographie 3 (figure 2). Cette information de température permet de mettre en œuvre une limitation de puissance de manière à protéger le moteur d'une démagnétisation si les aimants atteignent une température trop importante.

Cette protection est d'autant plus importante que cette contrainte de température des aimants est un facteur qui limite les performances continues à haut régime. L'estimation de la température permet aussi d'augmenter la puissance disponible à haut régime sans risque sur la fiabilité.

## Revendications

1. Procédé de contrôle du couple d'une machine électrique synchrone dans lequel on génère des consignes de courant statorique aptes à imposer une valeur de couple désirée, **caractérisé en ce que** les consignes de courant statorique sont générées à partir d'une estimation d'un flux magnétique rotorique sélectivement déterminée, selon les conditions de fonctionnement de la machine, soit en fonction de la température de fonctionnement du rotor de la machine, soit en fonction des valeurs mesurées de courant ($I_d$, $I_q$) statorique, de la tension statorique en quadrature ($V_q$) dans un repère tournant lié au rotor et de la vitesse de rotation du champ magnétique tournant ($\omega_r$) de la machine, les consignes de courant statorique étant générées à partir du flux magnétique estimé.

2. Procédé selon la revendication 1, dans lequel le flux magnétique est sélectivement estimé selon la température du rotor à bas régime de la machine.

3. Procédé selon l'une des revendications 1 et 2, dans lequel lors de l'estimation du flux magnétique en fonction de la température du rotor, on utilise un modèle thermique (2) du rotor pour délivrer une valeur de température du rotor, le flux magnétique étant extrait d'une cartographie (5) à partir de ladite valeur de température.

4. Procédé selon la revendication 3, dans lequel on détermine la température du rotor à partir du modèle thermique et on limite la puissance de la machine si la température dépasse une valeur de seuil.

5. Procédé selon l'une quelconque des revendications 1 à 4, dans lequel les consignes de courant sont extraites d'une cartographie (5) en fonction du couple désiré et du flux estimé.

6. Procédé selon l'une quelconque des revendications 1 à 5, dans lequel le flux magnétique est estimé d'une part en fonction de la température de fonctionnement du rotor ou d'autre part en fonction des valeurs mesurées de courant et de tension et de la vitesse de rotation du champ magnétique, respectivement pour des valeurs de régime de la machine relativement basses et relativement hautes.

7. Procédé selon l'une quelconque des revendications 1 à 6, dans lequel on génère une valeur de tension d'excitation du rotor au moyen d'un régulateur (6) à partir de valeurs générées de consigne de courant rotorique.

8. Procédé selon l'une quelconque des revendications 1 à 7, dans lequel les étapes de génération des consignes de courant sont mises en œuvre de manière itérative à une fréquence identique à une fréquence de mise à jour de l'estimation du flux magnétique rotorique, et inférieure à une fréquence de calcul des tensions statoriques nécessaire à la régulation des courants à leurs consignes.

**Patentansprüche**

1. Verfahren zur Steuerung des Drehmoments einer elektrischen Synchronmaschine, wobei Statorstrom-Sollwerte erzeugt werden, die einen gewünschten Drehmomentwert vorgeben können, **dadurch gekennzeichnet, dass** die Statorstrom-Sollwerte ausgehend von einer selektiv bestimmten Schätzung eines Rotormagnetflusses gemäß den Betriebsbedingungen der Maschine erzeugt werden, entweder abhängig von der Betriebstemperatur des Rotors der Maschine, oder abhängig von den gemessenen Statorstromwerten ($I_d$, $I_q$), von der Quadratur-Statorspannung ($V_q$) in einem mit dem Rotor verbundenen drehenden Bezugssystem und von der Rotationsgeschwindigkeit des rotierenden Magnetfelds ($\omega_r$) der Maschine, wobei die Statorstrom-Sollwerte ausgehend vom geschätzten Magnetfluss erzeugt werden.

2. Verfahren nach Anspruch 1, wobei der Magnetfluss gemäß der Temperatur des Rotors bei niedriger Drehzahl der Maschine selektiv geschätzt wird.

3. Verfahren nach einem der Ansprüche 1 und 2, wobei beim Schätzen des Magnetflusses abhängig von der Temperatur des Rotors ein thermisches Modell (2) des Rotors verwendet wird, um einen Temperaturwert des Rotors zu liefern, wobei der Magnetfluss aus einer Kartographie (5) ausgehend von dem Temperaturwert entnommen wird.

4. Verfahren nach Anspruch 3, wobei die Temperatur des Rotors ausgehend vom thermischen Modell bestimmt wird und die Leistung der Maschine begrenzt wird, wenn die Temperatur einen Schwellwert überschreitet.

5. Verfahren nach einem der Ansprüche 1 bis 4, wobei die Stromsollwerte aus einer Kartographie (5) abhängig vom gewünschten Drehmoment und vom geschätzten Fluss entnommen werden.

6. Verfahren nach einem der Ansprüche 1 bis 5, wobei der Magnetfluss einerseits abhängig von der Betriebstemperatur des Rotors oder andererseits abhängig von den gemessenen Strom- und Spannungswerten und der Rotationsgeschwindigkeit des Magnetfelds jeweils für relativ niedrige und relativ hohe Drehzahlwerte der Maschine geschätzt wird.

7. Verfahren nach einem der Ansprüche 1 bis 6, wobei ein Erregerspannungswert des Rotors mittels eines Reglers (6) ausgehend von erzeugten Rotorstrom-Sollwerten erzeugt wird.

8. Verfahren nach einem der Ansprüche 1 bis 7, wobei die Schritte der Erzeugung der Stromsollwerte iterativ mit einer Frequenz gleich einer Aktualisierungsfrequenz der Schätzung des Rotor-Magnetflusses und niedriger als eine Berechnungsfrequenz der Statorspannungen durchgeführt werden, die für die Regelung der Ströme auf ihre Sollwerte notwendig ist.

**Claims**

1. Method for controlling the torque of an electrical synchronous machine in which stator current setpoints capable of setting a torque desired value are generated, **characterised in that** the stator current setpoints are generated from a selectively determined estimation of a rotor magnetic flux, depending on the operating conditions of the machine, either as a function of the operating temperature of the rotor of the machine, or as a function of the measured values of stator current ($I_d$, $I_q$), of the quadrature stator voltage ($V_q$) in a rotating reference frame linked to the rotor and of the rotation velocity of the rotating magnetic field ($\omega_r$) of the machine, the stator current setpoints being generated from the estimated magnetic flux.

2. Method according to Claim 1, wherein the magnetic flux is selectively estimated according to the temperature of the rotor at low speed of the machine.

3. Method according to either of Claims 1 and 2, wherein, during the estimation of the magnetic flux as a function of the rotor temperature, a thermal model (2) of the rotor is used to deliver a temperature value of the rotor, the magnetic flux being extracted from a mapping (5) using said temperature value.

4. Method according to Claim 3, wherein the temperature of the rotor is determined from the thermal model and the power of the machine is limited if the temperature exceeds a threshold value.

5. Method according to any one of Claims 1-4, wherein the current setpoints are extracted from a mapping (5) as a function of the desired torque and the estimated flux.

6. Method according to any one of Claims 1-5, wherein the magnetic flux is estimated, firstly, as a function of the operating temperature of the rotor or, secondly, as a function of the measured values of current and of voltage and of the rotation velocity of the magnetic field, for relatively low and relatively high machine speed values, respectively.

7. Method according to any one of Claims 1-6, wherein a rotor excitation voltage value is generated by means of a regulator (6) using rotor current setpoint generated values.

8. Method according to any one of Claims 1-7, wherein the steps for generating the current setpoints are implemented iteratively at a frequency identical to a frequency for updating the estimation of the rotor magnetic flux, and less than a frequency for calculating the stator voltages that is necessary for regulating the currents to the setpoints thereof.

## FIG.1

## FIG.2

# FIG.3

Perte fonction du couple

Inertie thermique
Rotor

Coefficient d'échange

Inertie thermique
Stator — Mesure de température

# FIG.4

2

$C_{em}^{req}$

$\Phi_f$

Génération point de
fonctionnement

$I_d$ $I_q$

6

Régulation courant

$V_q$

estimation du flux
du rotor

$T_{stator}$

$\omega_r$

# FIG.5

# FIG.6

# FIG.7a

# FIG.7b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 102522930
- CN 103888041
- US 20090153087 A
- EP 2464002 A
- US 2013193886 A